# EUROPEAN PATENT APPLICATION

(11) **EP 3 196 833 A1**
(43) Date of publication of application: **26.07.2017**
(21) Application number: 15841309.6
(22) Date of filing: 14.09.2015
(51) Int. Cl.: G06Q 50/10

(54) **METHOD AND DEVICE FOR ONLINE MATCH MAKING, AND COMPUTER PROGRAM FOR IMPLEMENTING ONLINE MATCH MAKING**

(30) Priority: 15.09.2014 KR 20140121809
(71) Applicant: Hong International Corp., Seoul 08390 (KR)
(72) Inventor: HONG, Sang Uk, Seoul 06075 (KR)
(74) Representative: Treeby, Philip David William
(86) International application number: PCT/KR2015/009624
(87) International publication number: WO 2016/043483

(57) **Abstract**

Disclosed is an online match making method in an electronic dart game apparatus according to an exemplary embodiment of the present disclosure in order to implement the aforementioned object. The method includes: receiving a player input including identification information and matching request information of a player; determining a matching player among a plurality of other players by executing a match making algorithm based on the received player input; and a matching step of allowing executing a game with the determined matching player.

## Description

### [Technical Field]

The present disclosure relates to a dart game apparatus and a dart game match making apparatus, and more particularly, to providing online match making.

### [Background Art]

In general, a dart game is a game in which a dart is to be thrown at a distance from a dart board and a score is given by throwing an arrowhead-shaped instrument toward a circular target marked with numbers. As long as one has arrowhead-shaped darts and a dartboard which the darts hit, anyone may enjoy the dart game anytime anywhere regardless of the place and season. In recent years, as various game methods have been developed and a scoring method has been organized, the dart game has been developed as a worldwide leisure sport, and therefore, men and women of all ages have conveniently enjoyed the dart game.

In general, dart game players need to participate in the game at the same time and in the same space in order to enjoy the dart game. However, with development of communication technology, electronic dart game apparatuses have been developed in which each of the players of the dart game may remotely participate in the dart game so as to participate in the game over temporal and spatial constraints and remotely transmit a play result or a play process thereof through a communication network. The electronic dart game apparatuses may electrically sense a hitting point of the dart target and automatically aggregate scores and provide the aggregated scores to a player.

With regard to performing these online dart games, there is a need in the dart game field to enhance the player's entertainment side.

As prior art related with the present disclosure, Korean Patent Unexamined Publication No. 10-2013-0123984 is provided.

### [Disclosure]

### [Technical Problem]

The present disclosure has been made in an effort to provide online match making in an electronic dart game apparatus including a communication function with an external device.

### [Technical Solution]

Disclosed is an online match making method in an electronic dart game apparatus according to an embodiment of the present disclosure in order to implement the aforementioned object. The online match making method in the electronic dart game apparatus may include: receiving a player input including identification information and matching request information of a player; determining a matching player among a plurality of other players by executing a match making algorithm based on the received player input; and a matching step of allowing a game with the determined matching player to be executed.

Disclosed is an electronic dart game apparatus in another embodiment of the present disclosure. The electronic dart game apparatus includes: a player input unit receiving a player input including identification information and matching request information of a player; and a control unit determining a matching player among a plurality of other players by executing a match making algorithm based on the received player input and allowing a game with the determined matching player to be executed.

Disclosed is a match making method performed by a server which operates in connection with an electronic dart game apparatus through a network in yet another embodiment of the present disclosure. The match making method may include: receiving a player input including identification information and matching request information of a player from the dart game apparatus; determining a matching player among a plurality of other players by executing a match making algorithm based on the received player input; and transmitting information associated with the determined matching player to the electronic dart game apparatus.

Disclosed is a match making server which operates in connection with an electronic dart game apparatus through a network in still yet another embodiment of the present disclosure. The match making server may include: a receiving unit receiving a player input including identification information and matching request information of a player from the dart game apparatus; a control unit determining a matching player among a plurality of other players by executing a match making algorithm based on the received player input; a transmitting unit transmitting information associated with the determined matching player to the electronic dart game apparatus; and a database unit recording and storing the identification information of the player.

### [Advantageous Effects]

According to an embodiment of the present disclosure, online match making may be achieved in an electronic dart game apparatus including a communication function with an external device.

### [Description of Drawings]

FIG. 1 is a block diagram of a dart game apparatus according to an embodiment of the present disclosure.
FIG. 2 is a perspective view of the dart game apparatus according to the embodiment of the present disclosure.
FIG. 3 is a block diagram of a match making server according to the embodiment of the present disclosure and an exemplary block diagram in which various aspects of the present disclosure can be implemented.
FIG. 4 illustrates operations performed among components in a dart game system according to an embodiment of the present disclosure.
FIG. 5 illustrates a flowchart of an exemplary method for match making in an online game environment according to an embodiment of the present disclosure.
FIG. 6 illustrates a flowchart of an exemplary method for receiving a feedback from players when a game ends according to an embodiment of the present disclosure.
FIG. 7 illustrates an exemplary user interface that receives a feedback from a matching player according to an embodiment of the present disclosure.

### [Best Mode]

Various exemplary embodiments will now be described with reference to the drawings and similar reference numerals are used to represent similar elements throughout the drawings. In the specification, various descriptions are presented to provide appreciation of the present disclosure. However, it is apparent that the exemplary embodiments can be executed without the specific description. In other examples, known structures and apparatuses are presented in a block diagram form in order to facilitate description of the exemplary embodiments.

"Component", "module", "system", and the like which are terms used in the specification designate a computer-related entity, hardware, firmware, software, and a combination of the software and the hardware, or execution of the software. For example, the component may be a processing process executed on a processor, the processor, an object, an execution thread, a program, and/or a computer, but is not limited thereto. For example, both an application executed in a computing device and the computing device may be the components. One or more components may reside in the processor and/or execution thread and one component may be localized in one computer or distributed among two or more computers. Further, the components may be executed by various computer-readable media having various data structures, which are stored therein. The components may perform communication through local and/or remote processing according to a signal (for example, data transmitted from one component, which interacts with other components in a local system and a distribution system, to another system through a network such as the Internet) having one or more data packets, for example.

The description of the presented exemplary embodiments is provided so that those skilled in the art of the present disclosure use or implement the present disclosure. Various modifications of the exemplary embodiments will be apparent to those skilled in the art and general principles defined herein can be applied to other exemplary embodiments without departing from the scope of the present disclosure. Therefore, the present disclosure is not limited to the exemplary embodiments presented herein, but should be analyzed within the widest range which is consistent with the principles and new features presented herein.

"Opponent player", "match player", and "matching player' which are terms used in the present specification may be used interchangeably.

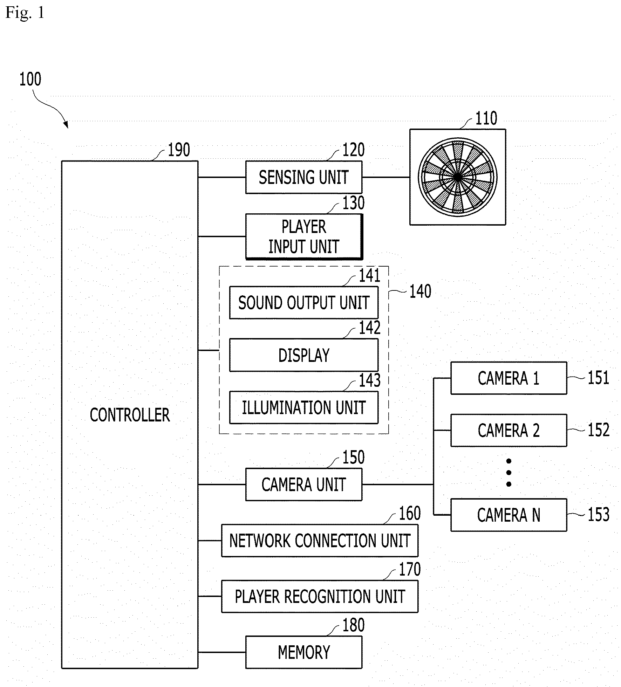

FIG. 1 is a block diagram of a dart game apparatus according to an exemplary embodiment of the present disclosure.

The dart game apparatus 100 may include a dart target 110, a sensing unit 120, a player input unit 130, an output unit 140, a camera unit 150, a network connection unit 160, a player recognition unit 170, a memory 180, a controller 190, and the like. The components illustrated in FIG. 1 are not required. Therefore, a dart game apparatus having more components than or less components than illustrated in FIG. 1 may be implemented. Hereinafter, the components will be described in sequence.

The dart target 110 may include a score board in which a bullseye is positioned at the center and there are areas segmented by concentric circles centered at the bullseye and straight lines extendeding radially from the bullseye and individual scores are assigned to the areas, respectively. Multiple holes into which a tip of a dart may be inserted may be formed on the score board.

The dart target 110 includes a display 142 as will be described below to variably change score deployments of the dart target 110 and shapes of areas to which the scores have been assigned. In this case, the dart target 110 includes a light transmissive touch pad in the display 142 to be stacked to take a form of a touch screen.

The sensing unit 120 may sense a play of a dart game player performed with respect to the dart target 110. The sensing unit 120 may enable a play of an actual game player to be evaluated. The sensing unit 120 may sense which area of the dart target 110 a thrown dart hits, with respect to a play in which the game player throws the dart. The sensing unit 120 electrically converts a score corresponding to the area which the dart hits to transmit the converted score to the controller 190.

The player input unit 130 receives an input of the player for controlling the dart game apparatus 100. The player input unit 130 may include a keypad, a dome switch, a touch pad (resistive/capacitive), a jog wheel, a jog switch, and the like. The player input unit 130 may also include cameras 151 to 153, a microphone, or the like. Additionally, the player input unit 130 may also include a short range communication module (not illustrated) to be described below. In the exemplary embodiment of the present disclosure, the player input unit 130 may be configured to include the short range communication module (not illustrated) of the network connection unit 160. When the player input unit 130 includes the short range communication module of the network connection unit 160, the player input unit 130 may be configured to receive a user input which is input by an external console device. As short range communication technology, Bluetooth, radio frequency identification (RFID), infrared data association (IrDA), ultra wideband (UWB), ZigBee, or the like may be used. For example, when the player input unit 130 performs the short range communication using infrared communication, the external console device may be an infrared remote controller. Alternatively, when the player input unit 130 performs the short range communication using a Bluetooth function, the external console device may be a mobile device including a Bluetooth module. The mobile device including the Bluetooth module may be, for example, a smart phone including the Bluetooth module.

The player may select a dart game mode, a match making request, a match authentication, the number of dart game players, a dart game play mode, and the like through the player input unit 130. For example, the player may select the number of dart game players, the dart game play mode (a zero one game, a cricket game, a count-up game, and the like), the dart game mode (a single play, a network play, and the like), an online match making request, and the match authentication through the player input unit 130.

The player input unit 130 receives a signal by sensing a key operation or a touch input of the player or receives speech or a motion through the cameras 151 to 153 or the microphone of the player to convert the received signal, speech, or motion into an input signal. To this end, a known speech recognition technology or a motion recognition technology may be used.

The output unit 140 which is used for generating an output related with sight, hearing, or touch may include a sound output unit 141, a display 142, an illumination unit 143, and the like.

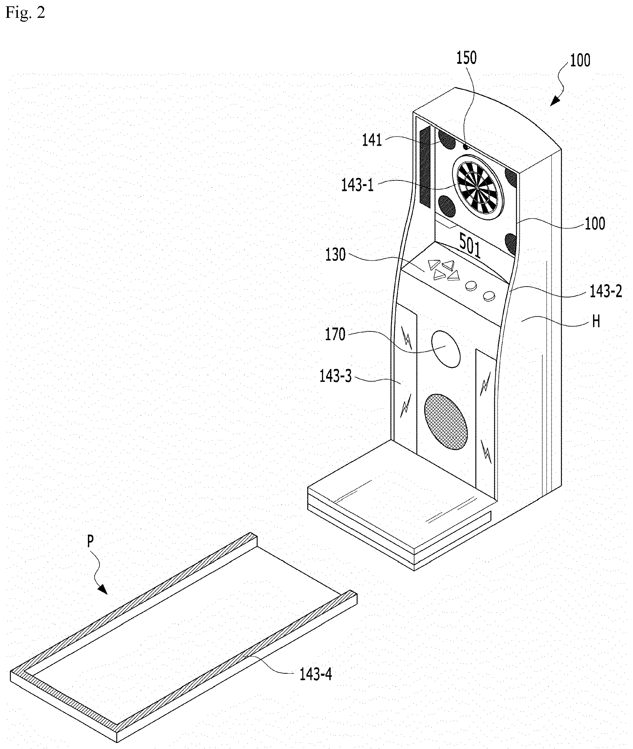

The sound output unit 141 may output audio data received from the network connection unit 160 or stored in the memory 180 in a game sound effect, a game motion guide, a game method description, and the like. The sound output unit 141 may also output a sound signal related with a function (e.g., a game effect sound) performed by the dart game apparatus 100. The sound output unit 141 may also output a speech of a game player or a third person using another dart game apparatus 200 (see FIG. 2), which is received through the network connection unit 160. The sound output unit 141 may include a receiver, a speaker, a buzzer, and the like. Additionally, as described below, an output of a match stand-by player list when the dart game apparatus 100 receives an online match making request, an output of an inquiry regarding whether to directly select the online match opponent player, an output of an inquiry regarding whether or not the opponent player and/or the current player inputs a match approval, and/or an output of a dart game apparatus designed to play the game may be output as audio information by the sound output module 141.

The display 142 displays (outputs) information processed in the dart game apparatus 100. For example, when the dart game apparatus 100 is in a game play mode guidance mode, the display 142 may output a selectable game play mode. Additionally, when the dart game apparatus 100 receives the online match making request, the display 142 may output a match making stand-by player list. Further, the display 142 may output a screen for inquiring whether to directly select the online match opponent player and may output a screen for inquiring whether the opponent player and/or the current player inputs the match approval. In addition, the display 142 may output a dart game apparatus designated to play the game based on a specific algorithm. Further, when the dart game apparatus 100 is playing a game, the display 142 may display the score sensed through the sensing unit 120 or output an image acquired by photographing the game player or the third person using another dart game apparatus received through the network connection unit 160.

The display 142 may include at least one of a liquid crystal display (LCD), a thin film transistor-liquid crystal display (TFT LCD), an organic light-emitting diode (OLED), a flexible display, and a 3D display. Some of the displays may be configured as a transparent or light transmissive type to view the outside through the displays. This may be called a transparent display and a representative example of the transparent display includes a transparent OLED (TOLED), and the like.

In the exemplary embodiment of the present disclosure, according to an implementation form of the dart game apparatus 100, two or more displays 142 may exist. For example, in the dart game apparatus 100, the plurality of displays may be separated from each other or integrally disposed on one surface, and further, disposed on different surfaces, respectively. For example, the display 142 may include both a display disposed at an upper end of the dart target 110 and a display disposed at a lower end of the dart target 110, or may include one display thereof. However, a location where the aforementioned displays are disposed is simply an example, and the display may be disposed at various locations for a demand due to a design or a visual effect.

The touch sensor may be configured to convert a change in pressure applied to a specific portion of the display 142 or capacitance generated at the specific portion of the display 142 into an electrical input signal. The touch sensor may be configured to detect touch pressure as well as a touched position and area. When there is a touch input for the touch sensor, a signal(s) corresponding to the touch input is(are) sent to a touch controller. The touch controller processes the signal(s) and thereafter, transmits data corresponding thereto to the controller 190. As a result, the controller 190 may know which area of the display 142 is touched.

The illumination unit 143 outputs a signal for notifying occurrence of an event of the dart game apparatus 100. Examples of the event which occurs from the dart game apparatus 100 include identification of the dart game player, direct hit of the dart, a change of the dart game player, game over, and the like. The illumination unit 143 may include a light emission diode (LED) and notify the occurrence of the event to the user through flickering of the LED. The LEDs are disposed on the bottom of the dart target 110 to be flickered according to a flickering pattern which is pre-stored according to the occurrence of the event. For example, one or more LEDs may be allocated to respective parts of the dart target 110. The allocated LEDs are disposed on the bottom of the dart target 110 and may be disposed in a direction orienting the outside of the dart game apparatus 100. When the LEDs irradiate light, the light irradiated by the LEDs may pass through the dart target 110 made of a transparent or translucent material to transfer a visual output to the user. Alternatively, the light irradiated by the LEDs may transfer the visual output to the user through a gap existing in the dart target 110.

The output unit 140 may also output another form other than a video signal or an audio signal, for example, a signal for notifying the occurrence of the event by vibration.

The camera unit 150 includes multiple cameras 151 to 153, and as a result, an image frame processed by the cameras 151 to 153 may be stored in the memory 180 or transmitted to the outside through the network connection unit 160. Two or more cameras 150 may be provided according to a use environment. At least some cameras of the camera unit 150 may be disposed to photograph an image frame including the dart target 110 and other cameras may be disposed to photograph an image frame directly related with a game rule in the dart game play. For example, the camera may be disposed to photograph a throw-line on which the dart is thrown in order to photograph the image frame directly related with the dart game rule. The multiple cameras 151 to 153 included in the camera unit 150 may be disposed to photograph at least some image frames to overlap with each other. In the embodiment of the present disclosure, when the camera unit 150 includes one camera, the camera may be a panoramic camera disposed to photograph both at least a part of the dart target 110 and the image frame (e.g., the throw-line in the dart game) directly related with the game rule.

The network connection unit 160 may include one or more modules that enable wireless communication between the dart game apparatus 100 and a wired/wireless communication system or between the dart game apparatus 100 and a network on which the dart game apparatus 100 is positioned. In the exemplary embodiment of the present disclosure, the network connection unit 160 may include a transmitting unit and a receiving unit. The network connection unit 160 may include a wired/wireless Internet module for accessing the network. As the wireless Internet technology, wireless LAN (WLAN) (Wi-Fi), wireless broadband (Wibro), world interoperability for microwave access (Wimax), high speed downlink packet access (HSDPA), or the like, may be used. As wired Internet technology, digital subscriber line (XDSL), fibers to the home (FTTH), power line communication (PLC), or the like may be used.

Further, the network connection unit 160 includes a short-range communication module to transmit and receive data to and from an electronic apparatus positioned in a comparatively short range from the dart game apparatus 100 and including the short-range communication module. As short range communication technology, Bluetooth, radio frequency identification (RFID), infrared data association (IrDA), ultra wideband (UWB), ZigBee, or the like may be used. In the exemplary embodiment of the present disclosure, the network connection unit 160 may sense a connection state of the network and a transceiving speed of the network. Data received through the network connection unit 160 may be output through the output unit 140, stored through the memory 180, or transmitted to other electronic apparatuses positioned in a short range through the short-range communication module.

Additionally, as described below, an output of a match making stand-by player list when the dart game apparatus 100 receives an online match making request, an output of an inquiry regarding whether to directly select the online match opposing player, an output of an inquiry regarding whether or not the opposing player and/or the current player inputs a match approval, and/or an output of a dart game apparatus designed to play the game may be transmitted even to a mobile or PC of the player based on identification information of the player, and the like by the network connection unit 160.

The player recognition unit 170 recognizes unique information of a long-range player by using a radio wave through radio frequency identification (RFID) technology which is a kind of short range communication technology. For example, the user may possess a card, a mobile terminal, or unique dart game equipment, for example, his/her own personal dart equipment, which includes an RFID module. Information (e.g., a personal ID, an identification code, and the like of the user registered in the database server (DB) (see FIG. 2)) for identifying the user may be recorded in the RFID module possessed by the player. The dart game apparatus 100 may identify the RFID module possessed by the user to identify a dart game player who plays the game by using the dart game apparatus 100 and update a database for the identified dart game player or accumulate new data. In the exemplary embodiment of the present disclosure, the player recognition unit 170 may be integrated in the player input unit 130.

The player recognition unit 170 may include various technologies (e.g., short-range communication technology such as Bluetooth, and the like) that may transmit and receive unique information of the user by a contact/non-contact method in addition to the RFID technology. Further, the player recognition unit 170 may include a biodata identification module that identifies biodata (speech, a fingerprint, and a face) of the player by interworking with the microphone of the player input unit 130, the touch pad, the camera unit 150, and the like.

The memory 180 may store a program related to a motion of the controller 190 therein and temporarily store input/output data (e.g., a phone book, a message, a still image, a moving picture, or the like) therein. The memory 180 may store data regarding various pattern vibrations and sounds output in the touch input on the touch screen. The memory 180 may include at least one storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game apparatus 100 may operate in connection with a web storage performing a storing function of the memory 180 on the Internet.

The controller 190 generally controls all motions of the dart game apparatus 100. For example, in the case of the dart game, the score sensed through the sensing unit 120 is collected for each game participant, the collected score is transmitted to and received from another dart game apparatus connected through the network, and a game winning/losing record, the score, and the like according to the collected result are recorded. The controller 190 may perform pattern recognition processing to recognize a motion input, a write input, and the like performed on the touch screen or camera as a text or an image. Further, the controller may perform speech recognition by using a speech-to-text (STT) function to recognize the speech input through the microphone as text. As illustrated in FIG. 1, since the controller 190 may communicate with all of the above-mentioned other components, the controller 190 may organically control operations of the corresponding components.

Various exemplary embodiments described herein may be implemented in a computer-readable recording medium or a recording medium readable by a device similar to the computer by using, for example, software, hardware, or a combination thereof. In terms of hardware implementation, the exemplary embodiment described herein may be implemented by using at least one of ASICs (application specific integrated circuits), DSPs (digital signal processors), DSPDs (digital signal processing devices), PLDs (programmable logic devices), FPGAs (field programmable gate arrays), processors, controllers, micro-controllers, microprocessors, and electric units for performing other functions. In some cases, the exemplary embodiments described in the specification may be implemented by the controller 190 itself. According to software implementation, exemplary embodiments such as a procedure and a function described in the specification may be implemented by separate software modules. Each of the software modules may perform one or more functions and operations described in the specification. A software code may be implemented by a software application written in an appropriate program language. The software code may be stored in the memory 180 and executed by the controller 190.

FIG. 2 is a perspective view of a dart game apparatus according to an exemplary embodiment of the present disclosure.

As illustrated in FIG. 2, the dart game apparatus 100 according to the exemplary embodiment of the present disclosure may be formed by mounting the components illustrated in FIG. 1 in a housing H. A dart target 110, a display 142, an illumination unit 143, a sound output unit 141, a camera unit 150, and a player recognition unit 160 may be disposed on the front surface of the dart game apparatus 100.

The dart target 110 may be disposed so that a dead center is positioned at a position (for example, 5 feet 8 inches in a vertical direction from the ground) which conforms with a rule of the dart game. The illumination units 143-1, 143-2, and 143-3 may be disposed at various parts of the dart game apparatus 100 to transfer various and variable visual effects to the player of the dart game apparatus 100. For example, the illumination unit 143-1 is disposed at the side of the dart target 110 and may serve to irradiate an illumination to the dart target 110. The illumination unit 143-1 may also output a predetermined illumination effect according to an event of the dart game. Further, the illumination unit 143-1 may output illumination effects having various colors.

The illumination unit 143-2 may be formed to be extended in a vertical direction along a forward projection of the housing H. Like the illumination unit 143 - 1, the illumination unit 143-2 may output a predetermined illumination effect according to an event of the dart game and output illumination effects having various colors.

The illumination unit 143-3 may be disposed on the side of the player recognition unit 170. The illumination unit 143-3 may output a predetermined illumination effect according to an event of the dart game and output illumination effects having various colors. Particularly, the illumination unit 143-3 may output an illumination effect for an event related with the user recognition unit 170.

Selectively, the dart game apparatus 100 may include a dart plate P which may be selectively connected with the dart game apparatus 100 and is extended in a horizontal direction. The dart plate P may further include an illumination unit 143-4. The dart plate P may be integrally coupled with or selectively attached to or detached from the dart game apparatus 100.

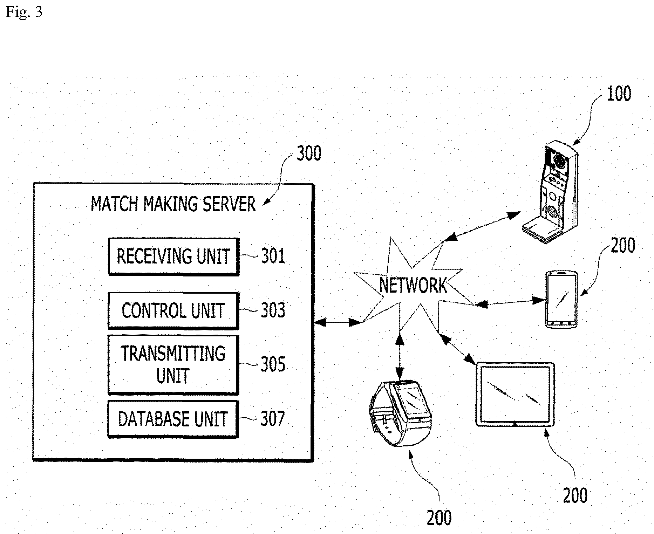

When the dart plate P is integrally coupled with or selectively attached to the dart game apparatus 100, the dart plate P may be electrically connected with the dart game apparatus 100. The illumination unit 143-4 of the dart game apparatus 100 may be disposed along the outside of the dart plate P as illustrated in FIG. 3. One end of the dart plate P may be extended to a place where a throw-line is to be positioned according to a distance of the throw-line from the dart target according to a rule of the game. The illumination unit 143-4 may be disposed at a position corresponding to the throw-line.

Although not illustrated in FIG. 2, an illumination unit (not illustrated) is disposed at the bottom of the dart target 110 to irradiate an illumination effect in a user direction. The illumination unit (not illustrated) may include a combination of different illumination elements allocated according to each segment configuring the dart target.

The housing H of the dart game apparatus 100 may include the display 142 disposed in the user direction. The display 142 may display information required for the user according to the progress of the dart game (for example, a collected score, information on a player who is playing the game, a score required for clearing the corresponding game, information of an opponent player who does not play the game, and the like). The display 142 may display a visual effect according to an event depending on the progress of the dart game. For example, when the user continuously hits a bullseye at the dead center of the dart target 100 with three dart throw chances, the display 142 may display a pre-stored motion picture corresponding to the corresponding event. The motion picture may be stored in the memory 180 of the dart game apparatus 100 or received from a server through the network connection unit 160.

The display 142 may provide the user with visual and audible effects according to occurrence of the event by interlocking with the illumination units 143-1, 143-2, 143-3, and 143-4 and the sound output unit 140. In other words, when a predetermined event occurs, the display 142, the illumination units 143-1, 143-2, 143-3, and 143-4, and the sound output unit 140 may output an illumination effect, a display effect, and a sound effect with respect to the corresponding event together.

In FIG. 2, it is illustrated that the displays 142 are disposed at the lower end of the dart target 110, but the number and disposed positions of displays 142 may be variously modified.

The player input unit 130 may be configured in a key pad button form as illustrated in FIG. 2. However, as described above, the player input unit 130 may be configured by various types including a touch screen. The player operates a key button of the player input unit 130 to select a mode of a game to be played by the player, an online matching request, the matching approval, and a feedback input.

The sound output unit 141 is also disposed on the front surface of the housing H of the dart game apparatus 100 to output a sound. The number and disposed positions of sound output units 141 may also be variously modified.

The camera unit 150 may be mounted on the top of the housing H of the dart game apparatus 100 as illustrated in FIG. 2. The camera unit 150 may include one or more cameras 151 to 153 which may photograph the dart target 110 and the throw line. The image photographed through the camera unit 150 may be transferred to the memory 180. According to the embodiment of the present disclosure, only some of the motion pictures photographed by the camera unit 150 may be finally stored in the memory 180 or transferred to the server through the network connection unit 160.

The player recognition unit 170 may be disposed on the front surface of the housing H of the dart game apparatus 100 and include a short range communication module as illustrated in FIG. 2. The player touches a recognition module, for example, a card for recognizing the player near the player recognition unit 170 to complete player authentication.

The contents illustrated in FIG. 2 and the description of the exterior of the aforementioned dart game apparatus 100 are just an example proposed for description, and the dart game apparatus 100 according to the present disclosure is not limited to the exterior illustrated in FIG. 2.

FIG. 3 is a block diagram of a match making server according to the exemplary embodiment of the present disclosure and an exemplary block diagram in which various aspects of the present disclosure can be implemented.

As illustrated in FIG. 3, the match making server 300 may be constituted by a receiving unit 301, a control unit 303, a transmitting unit 305, and a database unit 307. The match making server 300 may manage a group of one or more dart game apparatuses and communicate with the dart game apparatus 100, the terminal device, and/or another server through the receiving unit 301 and the transmitting unit 305. The terminal device may be a mobile phone 200, a tablet 200, and other commercializable UE 200 such as a PDA, a portable multimedia device, a PC, and the like.

The receiving unit 301 receives matching request information. The matching request information includes information on at least one of gender information of the matching player, age information of the matching player, local information of the matching player, rating information of the matching player, point per dart (PPD) information of the matching player, mark per round (MPR) information of the matching player, a reputation level of the matching player, ranking information of the matching player, and area information of an electronic dart game apparatus being used by the matching player. Besides, the matching request information may also include physical appearance features (e.g., a hairstyle and a height). Additionally, the matching request information may be based on the characteristics (e.g., the gender of the avatar and the costume of the avatar) of an avatar generated by the player.

Herein, the reputation level may be configured by a combination of player style information of the player and an evaluation (e.g., positive and negative feedback) of the player input by the matching player after the game ends. The play style information may include competitiveness, game performance sincerity, sociability, and the like. Additionally, if the matching player fails to perform the feedback input (e.g., the match making and/or the matching player evaluation), a penalty may be given to the player and reflected to the reputation level rating. The reputation level becomes a factor for a player who wants the match making to evaluate and select a matching player to enhance the satisfaction of the match making.

Herein, the play style information is a result of analyzing competitiveness, game performance sincerity, sociability, and the like, and is classified into n play style groups, or each item is scored or graded and illustrated or a specific title may be given to a certain score and/or grade or higher.

According to an additional exemplary embodiment, the competitiveness may be evaluated on the basis of the number of consecutive games of the player with the matching player, the total number of games, the summation of the number of matching players that have played the game together, and the like.

According to the additional exemplary embodiment, the game performance sincerity may be evaluated by verifying whether the game has been stopped or terminated in a negative way after starting the game with the matching player, or whether the feedback input has been performed after the game has ended.

According to the additional exemplary embodiment, the sociability is evaluated by considering the number of 'favorite' matching players which the player designates as 'favorite', the game continuity with the matching player, and the number of 'blocks' which the player receives from the matching player.

The aforementioned competitiveness, game performance sincerity, sociability, and the like are only examples for defining the play style of the player, and the aforementioned items may be omitted or other items may be added. In addition, the style group and/or specific title according to the play style information itself may be a factor of the matching request information.

Additionally, after the player terminates the game with the matching player, if the matching player fails to perform the match making and/or evaluate the matching player, a penalty may be given to the player to rate the reputation level. Additionally, the reputation level may be used as a weight when evaluating the matching player. For example, if the reputation level of the player evaluating the matching player is lower than the average reputation level of other players, the reputation level of the player may be rated with a low weight on the player's feedback input or the reputation level may be rated except for the feedback input. The reputation level may be used as an element for increasing the accuracy of the match making to the matching player at the time of the match making. The reputation level (for example, the play style information of the player and the evaluation of the player input from the matching player after the game ends) of the player is stored in the database unit 307 to be used when the match making server 300 calculates a matching rate.

The receiving unit 301 may be implemented in the form of a communication module that receives various information and data including the matching request information from the dart game apparatus 100, the mobile phone 200, the tablet 200, and other commercializable UE 200 such as the PDA, the portable multimedia device, or the PC via a wired/wireless communication scheme.

The control unit 303 may perform identification information recognition of the player, search, and imposing of player characterization for the match making, calculating the reputation level, calculating the matching rate using the match making algorithm, generating the matching player list, and updating the matching player list, and the like. When the matching request information is received from the terminal device (for example, mobile phone 200, tablet 200, other commercializable UE 200 such as the PDA, the portable multimedia device, the PC, and the like) of the player or the dart game apparatus 100 of the player, the control unit 303 of the match making server 300 searches for the player identification information stored in the database unit 307 of the match making server and calculates the matching rate through the match making algorithm. The matching rate is calculated by giving a weight to each element according to the matching request information input from the player. The control unit 303 may generate the updated matching player list according to the matching rate calculation. In addition, the match making server 300 may store the updated matching player list in the database unit 307.

The match making algorithm includes calculating the matching rate based on matching request information input from the player and profiles of potential matching players stored in the database unit 307 and determining the matching player according to the calculated matching rate. Additionally, a virtual player may be presented as the matching player if the calculated match rate does not exceed a predetermined threshold. For example, if the matching rate does not exceed the threshold value when the predetermined threshold value is 40%, the virtual player may be output to the matching player list.

The match making server 300 may transmit the updated match making stand-by player list to the dart game apparatus 100 associated with the player who requests the match making by the transmitting unit 305 and/or transmit the updated match making stand-by player list to the mobile phone 200, the tablet 200, other commercializable UE 200 such as the PDA, the portable multimedia device, the PC, and the like of the player requesting the match making.

The network as a wired/wireless communication network connects a user terminal device such as the mobile phone 200, the tablet 200, other commercializable UE 200 such as the PDA, the portable multimedia device, the PC, and the like of the player, the dart game apparatus 100, and the match making server 300. Information exchange between each terminal device, the dart game apparatus 100, and the server may be performed by a predetermined communication protocol. The network connecting each of the servers and the user terminal device need not particularly be a single network. The network may be a LAN, a WAN, an Intranet or the Internet, or a combination thereof, which enables communication between multiple computing devices. Moreover, the network may include a wireless, wired, or wireless and wired association and connection. In addition, techniques including VPN, and the like may be used to reinforce the security.

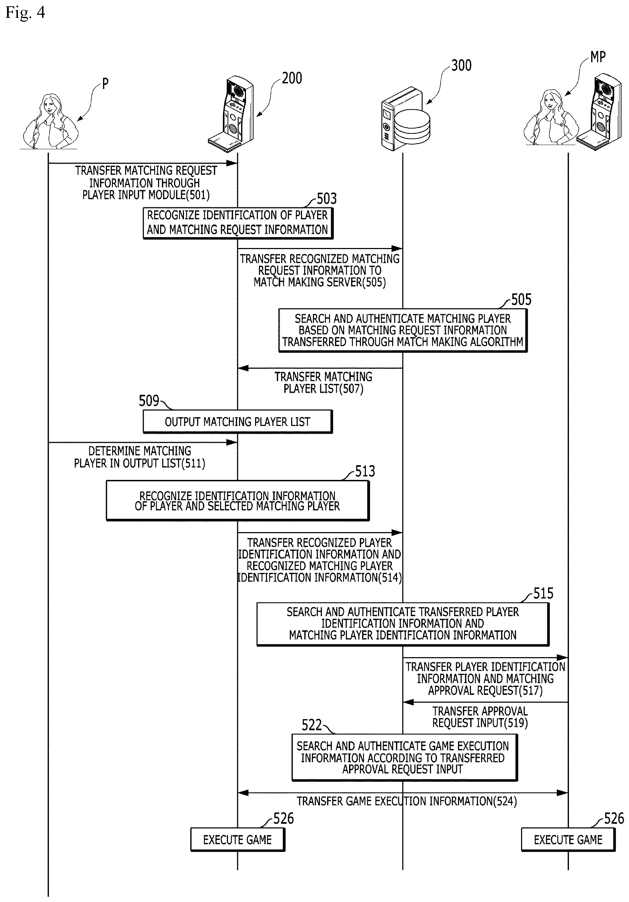

FIG. 4 illustrates operations performed among components in a dart game system according to an exemplary embodiment of the present disclosure.

Although not illustrated, the match making server 300 may receive the matching request information through not the input unit of the dart game apparatus 100, but the terminal device of the player (for example, the mobile phone 200, the tablet 200, other commercializable UE 200 such as the PDA, the portable multimedia device, the PC, and the like of the player).

When the matching request information is transferred through the player input module (501), the dart game apparatus (200) recognizes the identification information of the player and the matching request information (503). The dart game apparatus 200 transfers the recognized identification information of the player and matching request information to the match making server 300 (505). The match making server 300 (see FIG. 3) receives the player identification information and the matching request information through the receiving unit 301 (see FIG. 3). The control unit 303 and the database unit 307 of the match making server 300 (see FIG. 3) search and/or authenticate the matching player based on the matching request information transmitted through the match making algorithm (505). Although not illustrated, the control unit 303 and the database unit 307 of the match making server 300 (see FIG. 3) calculate the matching rate based on the matching request information of the player through the match making algorithm. The transmitting unit 305 of the match making server 300 transfers the matching player list determined according to the matching rate to the dart game apparatus 100. The dart game apparatus 100 outputs the matching player list (509). When the matching player is determined in the output list (511), the dart game apparatus 100 goes through a step (513) of recognizing the identification information of the player and the selected matching player. The dart game apparatus 100 transfers the recognized identification information of the player and the recognized identification of the matching player to the match making server 300 (514). The match making server 300 searches and authenticates the received player identification information and matching player identification information (515). The match making server 300 transfers the identification information of the player and the matching approval request to the matching player selected by the player (517). When the match making server 300 (see FIG. 3) receives the approval request input from the dart game apparatus 100 and/or the terminal device (e.g., the mobile phone 200, the tablet 200, other commercializable UE 200 such as the PDA, the portable multimedia device, the PC, and the like of the player) (see FIG. 3) (519), the match making server 300 searches and authenticates game execution information according to the received approval request input (522). When the match making server 300 transfers the game execution information to the dart game apparatus being used by the player and the matching player (524), the game is executed.

The aforementioned elements are just exemplary methods for matching the players with other players in the online game environment, and steps may be omitted or added.
In addition, at least some of the operations of the match making server 300 in FIG. 4 may be implemented by the dart game apparatus 100.

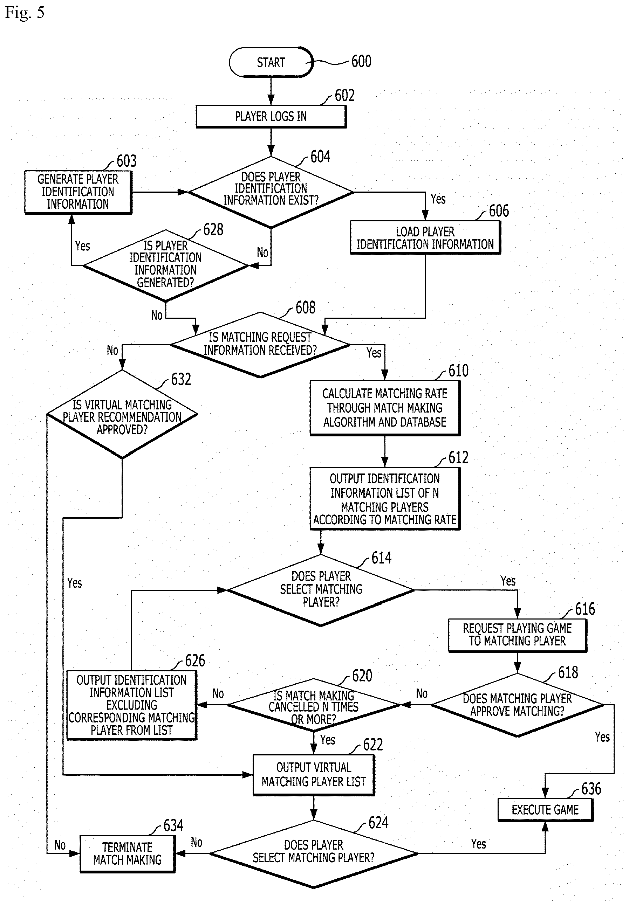

FIG. 5 illustrates a flowchart of an exemplary method for match making in an online game environment according to an exemplary embodiment of the present disclosure. Additionally, FIG. 5 may be implemented by the server and/or the dart game apparatus 100.

It is very interesting to play the electronic dart game with persons who have similar tastes to the player online. The present disclosure connects players having similar tastes to each other by utilizing information using conditions inputted by the player. The present disclosure may enhance enjoyment in using the electronic dart game through a player-customized match making element. This may increase satisfaction for match making services and/or electronic dart games.

The exemplary method for the match making begins with step 602 in which the player is logged in the match making service or the dart game service as illustrated. Additionally, there may be a variety of methods to access the match making server 300 for the match making. For example, the match making server 300 may receive login information (alternatively, matching request information) through the input unit of the dart game apparatus 100 or receive the login information (alternatively, matching request information) through the terminal device (for example, the mobile phone 200, the tablet 200, other commercializable UE 200 such as the PDA, the portable multimedia device, the PC, and the like of the player) of the player.

Once the player logs in the match making service (602), it is determined whether there is identification information for the player (604). As described above, the player identification information may be an arbitrary type of a number of different parameters associated with the user. For example, the identification information may include an identification number assigned to the player, technical information (e.g., computer speed and access speed) of the player, general information (e.g., gender, age, and region) of the player, play information (e.g., rating information, point per dart (PPD) information, mark per round (MPR) information, reputation level, and ranking information) of the player, and/or local information of the electronic dart game apparatus being used by the player. The player identification information may further include physical appearance characteristics (e.g., a hair style and a height), avatar characteristics generated by the player, and the like. In addition, the style group and/or specific title according to the play style information itself may be the factor of the matching request information.

In accordance with step 604, it is determined whether the identification information of the player exists. If the player identification information exists, the player identification information is loaded (606). When the identification information of the player is loaded (606), it is determined whether to receive the matching request information from the player in step 608. If the matching request information is not received, a virtual matching player recommendation approval step 632 is performed. If the player approves a virtual matching player recommendation, a virtual matching player list is output (622). If the virtual matching player is selected through step 624 in which the player selects the matching player in the output virtual matching player list, the game is executed (636). If the player does not select the matching player out of the output virtual matching player list within a predetermined threshold time, the match making ends without further performing the match making (634). By returning to step 632, if the player does not approve the virtual matching player recommendation, the match making ends without further performing the match making (634).

By returning to step 608, when the matching request information is received from the player, the matching rate is calculated through the match making algorithm and the database (610). In step 612, an identification information list of n (n is a natural number) matching players is output according to the matching rate. Additionally, the player may determine the number of matching players to be output as the list by accessing the match making server in advance. Alternatively, the match making server may arbitrarily select and output n persons. The match making server may arbitrarily determine the output number n of matching players. Additionally, the number of matching players to be output may be determined by the player. In addition, the matching player list may be output in the order of higher matching rate according to the matching rate or the like.

The matching player is selected by the player from the matching player list through step 614. If the matching player is selected from the output matching player list, the matching player is requested to perform the game together (616). The matching request sent by the match making server may be approved in step 618. If the matching request is approved by the matching player, the game is executed (636).

Additionally, if the matching request is not approved by the matching player, it is verified whether a match making cancellation is equal to or more than the threshold (n times, where n is a natural number) in step 620. The match making server may set the number n of match making cancellation times as the threshold value in advance. When the match making is cancelled n times, the virtual matching player list is output without further inquiring the match making to the player or the matching player (622). In addition, if the match making is canceled as a value less than the threshold value (n times), the matching list is output except for the matching player that does not approve the matching request in the matching list (626). That is, the player may select the matching player (n-1) times. Additionally, the threshold value may be determined by the player.

A step (628) in which the identification information of the player may be generated starts when the identification information of the player does not exist. Although not illustrated, the generation of the identification information of the player may be implemented by transmission to the match making server after direct input through the input unit of the electronic dart apparatus and/or direct transmission to the match making server by using the wired/wireless communication scheme from the terminal device of the player such as the mobile phone 200, the tablet 200, other commercializable UE 200 such as the PDA, the portable multimedia device, the PC, and the like of the player. In addition, the player identification information is stored and managed in the database unit 307 of the match making server 300. If the player identification information is generated from the player (630), the player identification information is loaded (606).

Returning to step 604, if there is no player identification information, the identification information of the player may be generated through step 628. Although not illustrated, the player identification information may be generated through a series of steps. When the identification information generation of the player is requested, the player identification information is generated through a series of steps (630). Additionally, newly generated player identification information is immediately stored and updated in the database unit 307 (see FIG. 3) of the match making server 300 (see FIG. 3).

Additionally, when the matching request data is not input from the player without the identification information of the player, whether the virtual matching player recommendation is approved is verified through step 632. If the player approves the virtual matching player recommendation, the virtual matching player list is output (622). Thereafter, step 624 in which the matching player is selected by the player begins. When no matching player is selected, the match making ends (634) and when the matching player is selected, the game is executed (636).

In addition, even when the identification information of the player is not generated, matching request data may also be received through step 608. It is similar to when the matching rate is calculated through the match making algorithm and the database (610) to output an identification information list of n matched players according to the matching rate (612), but when the matching request is made to the matching player selected from the player of which the identification information is not generated (616), a probability of matching approval from the matching player may be lowered. Although not illustrated, it is recognized that a matching rejection input is received from the matching player when a predetermined threshold time (n seconds) is exceeded, and the match making is automatically terminated.

In addition, the matching player list may further include a step of preferentially outputting a player who is currently connected to the electronic dart game apparatus. In addition, a matching player having a high matching rate among non-connected players is output together so that the player may make the matching player 'friend making'. The 'friend making' may be input via the feedback input interface after the game is completed or may be input and/or modified through the provided application.

Additionally, the method may further include a step of presenting the virtual player as the matching player when the matching rate does not exceed a predetermined threshold value (e.g., matching rate of 40%). In addition, the player who is currently connected to the electronic dart game apparatus may be preferentially outputted from the matching player list.

The aforementioned steps are just exemplary methods for the match making in the online game environment, and steps may be omitted or added.

Existing match making has been implemented in a random manner, rather than matching a player-customized matching player. The player may want to play the game with a player who has a similar game score and a similar ranking thereto, but there are many cases in which the player may not want to play the game. For example, even through the players have similar game scores and rankings, the player may not be interested in the game unless the matching player is of the same age group. Therefore, there is a need for a method and an apparatus for performing the match making in consideration of various interests of the player. The aforementioned match making emphasizes the entertainment aspect of the dart game apparatus by receiving the matching request information from the player and providing the player-customized matching player list.

The present disclosure includes determining a matching player among a plurality of other players by receiving a player input including identification information of a player and matching request information as described above, determining the matching player among the plurality of other players by executing the match making algorithm based on the received player input, and a matching step that allows executing the game with the determined matching player to present the player-customized matching player.

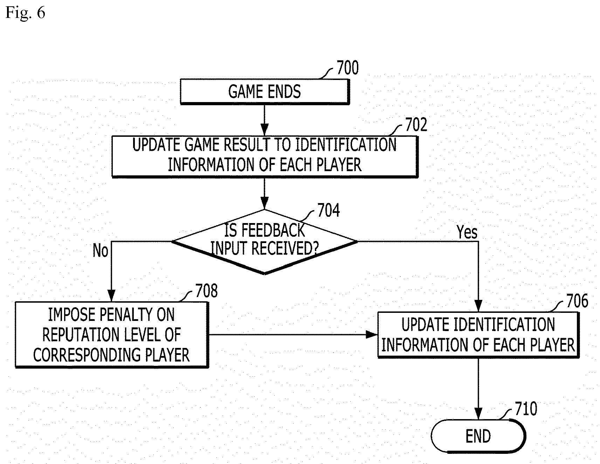

FIG. 6 illustrates a flowchart of an exemplary method for receiving a feedback from players after a game ends according to an exemplary embodiment of the present disclosure.

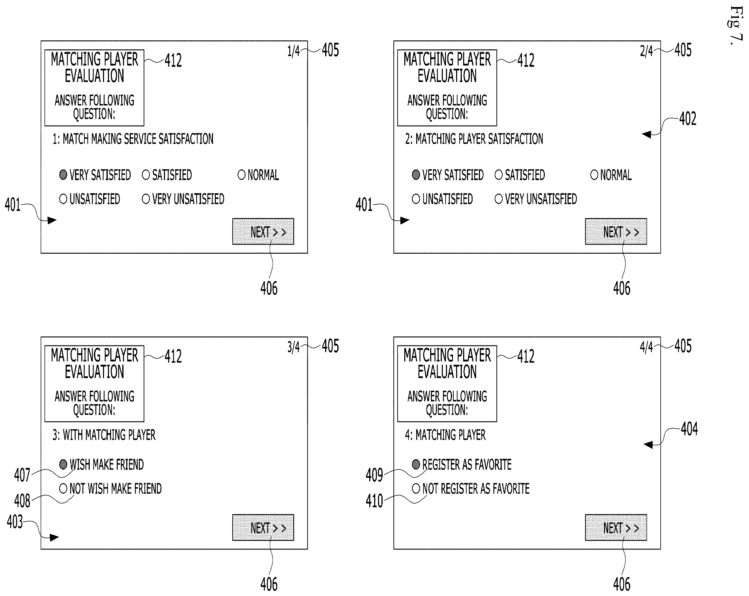

When the game played by the player and the matching player ends (700), the feedback input starts. The game result is automatically updated to the identification information of each player (702) and stored in the database unit 307 (see FIG. 3) of the match making server 300 (see FIG. 3). The game result is updated in the identification information of the player and the matching player and stored in the database unit 307 (see FIG. 3). Additionally, in step 704, each player may be requested to input the match making and/or feedback for the matching player. The feedback includes at least one of evaluation of a game manner of the opponent player and an input of friend making with the opponent player. This will be described later in FIG. 7.

When the feedback to the matching player is input, the control unit 303 of the match making server 300 searches and/or updates the identification information of each player by reflecting the feedback (706) and records and stores the identification information in the database unit 307. Additionally, when no feedback to match making and/or the matching player is input from a player who completes playing the game, the penalty may be imposed on the reputation level of the player through step 708. For example, when no feedback is input from the player, the penalty may be imposed on the game performance sincerity of the player. The game performance sincerity may become a component of the play style information configuring the reputation level of the player. When the penalty is imposed on the reputation level of the player who does not input the feedback in step 708, the control unit 303 of the match making server 300 searches and/or updates the identification information of each player (706) and records and stores the updated identification information in the database unit 307. When the feedback input process is finished after the game ends, the identification information of each player is updated and the process ends (710).

In addition, in the case of the feedback input, steps may be omitted or reduced for convenience of the player and accuracy of the reputation level of the player. For example, when playing a game in succession with a matching player, the feedback input step may be omitted without receiving the feedback input whenever each game ends.

FIG. 7 illustrates an exemplary user interface that receives a feedback from a matching player according to an exemplary embodiment of the present disclosure. The feedback input interface may be implemented on the player input unit 130 of the dart game apparatus and/or on the player terminal device.

The interface shows a feedback mechanism by which a player may input the feedback (see 704 in FIG. 6) to other game players. The feedback input includes at least one of a game manner evaluation input of the opponent player and an input of friend making with the opponent player. In addition, satisfaction of the online match making provided may be input. This feedback is used to improve the match making result and to extend the player to extend the relationship with the matching player. Additionally, the interface is only an exemplary step of receiving the feedback from the player and may be omitted or added.

The interface includes at least one of feedback input contents 412 (e.g., 'matching player evaluation' in FIG. 7), a corresponding page to be input and a total number of input pages 405, and a page turn indication 406 for receiving a next feedback input item.

Additionally, the page may vary according to each feedback input item. For example, in 401, a feedback input for 'satisfaction of match making service' may be received and in 402, a feedback input of 'matching player satisfaction' may be received. Additionally, each page may vary depending on the response to each feedback input item. For example, if the player desires to make a friend with the opponent player in 403 (407), a screen 404 for selecting whether to make the matching player as 'favorite' may be displayed. Although not illustrated, when the player does not desire to make a friend with the opponent player in 403 (408), a screen for selecting whether to 'block' the matching player may be displayed. The aforementioned elements are merely exemplary elements constituting the user interface for receiving the feedback from the player, and each element may be omitted or added.

In addition, in the feedback input, steps may be omitted or a process may be reduced for convenience of the player and the accuracy of the reputation level of the player. For example, in the case of a matching player already registered as a 'favorite', the feedback input may be omitted. In addition, the feedback input during consecutive games with the matching player may be omitted. Additionally, in order to increase the accuracy of the feedback input, the control unit 303 (see FIG. 3) of the match making server 300 (see FIG. 3) may arbitrarily delete the feedback inputted repeatedly from the same matching player in a short period of time or reflect the feedback by lowering the weight. Additionally, when one or both of them give negative feedback (e.g., complaints / strong complaints in 402, friend making is not wished in 403(408), block registrations, etc.) to the other party, the match making server may remove the player from the matching player list and output the matching player list when the next matching request is received.

The feedback input may provide better match making. In addition, the feedback input is updated to the identification information of each player and stored in the database unit 307 of the match making server 300.

The present disclosure may be connected to the match making server through the dart game apparatus 100 and the terminal device (for example, the mobile phone 200, the tablet 200, other commercializable UE 200 such as the PDA, the portable multimedia device, the PC, and the like in FIG. 3) which is communicatable by using the wired/wireless communication scheme. According to an additional exemplary embodiment, additional software may be provided for convenience of use of the terminal device and interest of the dart game. The software may provide a next game appointment making function, a messenger (chat) function, and the like. Feedback inputs such as 'friend making', 'favorite', 'block' and the like may also be changed through the software. The changed contents are immediately updated and stored in the database unit 307 (see FIG. 3) of the match making server.

### [Industrial Applicability]

The present disclosure may be used for the dart game apparatus and the dart game match making device, and the like.

## Claims

1. A method for online match making in an electronic dart game apparatus comprising:
receiving a player input including identification information and matching request information of a player;
determining a matching player among a plurality of other players by executing a match making algorithm based on the received player input; and
a matching step of allowing executing a game with the determined matching player.

2. The online match making method of claim 1, wherein the matching request information includes at least one of gender information of the matching player, age information of the matching player, local information of the matching player, rating information of the matching player, point per dart (PPD) information of the matching player, mark per round (MPR) information of the matching player, a reputation level of the matching player, ranking information of the matching player, and area information of an electronic dart game apparatus being used by the matching player.

3. The online match making method of claim 1, wherein the match making algorithm is executed partially based on at least one of identification information of the player and the matching player, the gender information of the matching player, the age information of the matching player, the local information of the matching player, the rating information of the matching player, point per dart (PPD) information of the matching player, the mark per round (MPR) information of the matching player, the reputation of the matching player, ranking information of the matching player, and the area information of an electronic dart game apparatus being used by the matching player.

4. The online match making method of claim 1, wherein the match making algorithm includes calculating the matching rate based on matching request information input from the player and profiles of potential opponent players stored in the database and determining the matching player according to the calculated matching rate.

5. The online match making method of claim 4, wherein the match making algorithm further includes presenting a virtual player as the matching player if the calculated matching rate does not exceed a predetermined threshold.

6. The online match making method of claim 1, wherein the determining of the matching player includes outputting a list of matching players determined through the match making algorithm.

7. The online match making method of claim 6, further comprising:
preferentially outputting the player who is currently connected to the electronic dart game apparatus from the matching player list.

8. The online match making method of claim 1, wherein the matching includes receiving a matching approval input from the matching player selected by the player.

9. The online match making method of claim 8, further comprising:
canceling the match making when the matching approval input is not received from the selected matching player for a predetermined threshold time or a matching rejection input is received from the matching player.

10. The online match making method of claim 9, further comprising:
outputting a list of matching players other than a rejecting matching player through the match making algorithm when the match making is cancelled.

11. The online match making method of claim 1, further comprising:
receiving feedback inputs from players who play the game when the game with the matching player is completed.

12. The online match making method of claim 11, wherein the feedback input includes at least one of a game manner evaluation input of the matching player and an input of friend making with the matching player.

13. The online match making method of claim 12, wherein the friend making input is based on inducing selection of a favorite function to preferentially array the matching players in the matching player list at the time of a subsequent play or inducing selection of a 'block' function to exclude the matching player from the matching player list at the time of the subsequent play.

14. An electronic dart game apparatus comprising:
a player input unit receiving a player input including identification information and matching request information of a player; and
a control unit determining a matching player among a plurality of other players by executing a match making algorithm based on the received player input and allowing executing a game with the determined matching player.

15. A match making method performed by a server which operates in connection with an electronic dart game apparatus through a network, the method comprising:
receiving a player input including identification information and matching request information of a player from the dart game apparatus;
determining a matching player among a plurality of other players by executing a match making algorithm based on the received player input; and
transmitting information associated with the determined matching player to the electronic dart game apparatus.

16. A match making server which operates in connection with an electronic dart game apparatus through a network, the server comprising:
a receiving unit receiving a player input including identification information and matching request information of a player from the dart game apparatus;
a control unit determining a matching player among a plurality of other players by executing a match making algorithm based on the received player input;
a transmitting unit transmitting information associated with the determined matching player to the electronic dart game apparatus; and
a database unit recording and storing the identification information of the player.
